Europäisches Patentamt

European Patent Office

Office européen des brevets

(11) Numéro de publication: **0 275 579 B1**

## (12) FASCICULE DE BREVET EUROPEEN

(45) Date de publication de fascicule du brevet:
20.03.91

(51) Int. Cl.5: **C08K 3/18**, C08L 27/16,
//(C08K3/18,3:24,3:26)

(21) Numéro de dépôt: 87202405.4

(22) Date de dépôt: 03.12.87

(54) **Compositions stabilisées au stockage à base de polymères du fluorure de vinylidène comprenant un molybdate de métal.**

(30) Priorité: 15.12.86 FR 8617622

(43) Date de publication de la demande:
27.07.88 Bulletin 88/30

(45) Mention de la délivrance du brevet:
20.03.91 Bulletin 91/12

(84) Etats contractants désignés:
AT BE CH DE ES FR GB GR IT LI LU NL SE

(56) Documents cités:
EP-A- 0 107 220

(73) Titulaire: SOLVAY & Cie (Société Anonyme)
Rue du Prince Albert, 33
B-1050 Bruxelles(BE)

(72) Inventeur: **De Berraly, Jean-Marie**
**Place Jean Jacobs, 5**
**B-1410 Waterloo(BE)**
Inventeur: **Simoens, Anthony**
**Avenue de Celles, 27**
**B-5030 Vedrin(BE)**

(74) Mandataire: **Marckx, Frieda et al**
**Solvay & Cie Département de la Propriété**
**Industrielle 310, rue de Ransbeek**
**B-1120 Bruxelles(BE)**

## Description

La présente invention concerne des compositions stabilisées au stockage à base de polymères du fluorure de vinylidène comprenant un molybdate de métal.

Les polymères du fluorure de vinylidène sont difficilement inflammables et auto-extinguibles. On a déjà proposé d'y incorporer des additifs retardateurs de flamme en vue d'améliorer encore leur résistance à l'inflammation. Néanmoins, les retardateurs de flamme se sont généralement révélés inaptes à empêcher totalement, à température élevée, la combustion des objets façonnés en polymères du fluorure de vinylidène. Par ailleurs, on sait à présent que, contrairement à l'opinion généralement répandue, la combustion des objets façonnés en polymères du fluorure de vinylidène engendre l'émission de fumée en quantité suffisante pour constituer en inconvénient aussi grave que les flammes elles-mêmes, dans la mesure où elle rend plus difficile l'intervention des secours.

Dans le brevet FR-A-82 17 123 (SOLVAY & Cie), on décrit l'utilisation de dérivés de molybdène, tels que les molybdates de métaux, pour réduire efficacement la quantité de fumée émise lors de la combustion des polymères du fluorure de vinylidène.

On a maintenant constaté que les compositions à base de polymères du fluorure de vinylidène qui comprennent des molybdates de métaux présentent l'inconvénient de bleuir au stockage en atmosphère humide. Quoique ce bleuissement n'affecte pas l'efficacité fumicide des molybdates de métaux, l'apparition d'une coloration bleuâtre réduit sérieusement les possibilités d'emploi des compositions en cause, notamment dans le domaine du façonnage d'objets incolores ou colorés en teintes claires, tels que les gaines de câbles.

La présente invention, telle qu'elle est caractérisée dans les revendications, a pour but de pallier l'inconvénient précité. A cet effet, elle procure des compositions à base de polymères du fluorure de vinylidène comprenant un molybdate de métal dont le coloris soit stable au stockage en atmosphère humide.

Selon l'invention, ces compositions contiennent, comme stabilisant, une quantité efficace de carbonate de métal alcalin ou alcalino-terreux. Tous les carbonates des métaux alcalins ou alcalino-terreux et leurs mélanges conviennent à la réalisation des compositions selon l'invention. On donne néanmoins la préférence aux carbonates des métaux alcalino-terreux tels que, par exemple, les carbonates de calcium, de magnésium ou de baryum. Un carboate de métal alcalino-terreux tout particulièrement préféré est le carbonate de calcium.

La quantité de carbonate présente dans les compositions selon l'invention peut varier dans une assez large mesure. Habituellement, on utilise le carbonate à raison de 1 partie en poids au moins et de 100 parties en poids au plus pour 100 parties de molybdate. De préférence, on l'utilise à raison de 5 à 30 parties en poids au total pour 100 parties de molybdate de métal.

Tous les molybdates de métaux et leurs mélanges sont utilisables dans les compositions selon l'invention. A titre d'exemples de pareils molybdates, on peut citer les molybdates de sodium, de bismuth, de calcium, de zinc et d'aluminium. Des molybdates de métaux particulièrement préférés sont les molybdates de calcium, de zinc et d'aluminium.

La quantité de molybdate présente dans les compositions selon l'invention peut varier dans une large mesure, notamment en fonction du résultat visé et de la nature du molybdate utilisé. Habituellement, on utilise le molybdate à raison de 0,05 à 2 parties en poids, exprimées en molybdène métallique, pour 100 parties de polymère du fluorure de vinylidène et, de préférence, de 0,10 à 0,50 partie.

Des compositions préférées selon l'invention contiennent donc de 5 à 30 parties en poids de carbonate de métal alcalino-terreux pour 100 parties de molybdate de métal et de 0,10 à 0,50 partie en poids de molybdate de métal, exprimée en molybdène métallique, pour 100 parties de polymère du fluorure de vinylidène.

Par polymères du fluorure de vinylidène, on entend désigner tous les polymères contenant au moins 85 % molaires, et, de préférence, au moins 90 % molaires d'unités monomériques dérivées du fluorure de vinylidène. Les polymères du fluorure de vinylidène qui conviennent à la réalisation des compositions selon l'invention comprennent donc aussi bien les homopolymères du fluorure de vinylidène que ses copolymères contenant des unités monomériques dérivées d'un ou de plusieurs comonomères. Des résultats particulièrement avantageux sont obtenus avec les polymères du fluorure de vinylidène contenant au moins 90 % molaires d'unités monomériques dérivées du fluorure de vinylidène, le complément éventuel étant constitué de préférence d'unités monomériques dérivées d'autres oléfines fluorées, telles que le fluorure de vinyle, le trifluoréthylène, le chlorotrifluoréthylène, le tétrafluoréthylène et l'hexafluorpropylène.

En plus du molybdate et du carbonate, les compositions selon l'invention peuvent contenir tous les additifs usuels des polymères du fluorure de vinylidène, tels que des lubrifiants, des retardateurs de flamme, des additifs polymériques etc. En général, les compositions selon l'invention contiennent au moins 65 % en poids d'un ou de plusieurs polymères du fluorure de vinylidène et, le plus souvent, au moins 80 % en poids de pareils polymères.

Pour préparer les compositions selon l'invention, le carbonate et le molybdate peuvent être mis en oeuvre sous n'importe quelle forme, en poudre ou en dispersion aqueuse par exemple. Cependant, pour des raisons de commodité, on préfère les mettre en oeuvre sous la forme d'une poudre. Dans ce cas, il est avantageux d'utiliser des poudres ayant une dimension de particules moyenne inférieure à environ 200 $\mu$m. De préférence, celle-ci est inférieure à 100 $\mu$m et plus particulièrement à 50 $\mu$m.

La préparation des compositions selon l'invention ne présente pas de problème particulier, toutes les techniques habituelles de préparation de ces compositions pouvant être utilisées. Ainsi, on peut mélanger le carbonate et le molybdate avec le polymère de fluorure de vinylidène dès le stade de la polymérisation, soit par introduction directe dans le milieu de polymérisation, en fin de polymérisation, soit encore par addition au gâteau humide obtenu par essorage ou filtration de la dispersion aqueuse venant de polymérisation. Un mode opératoire particulièrement avantageux consiste à ajouter le carbonate et le molybdate au polymère du fluorure de vinylidène sous la forme d'une poudre lors de la fabrication d'un prémélange, en même temps que les autres additifs entrant dans la composition. On peut aussi introduire le carbonate et le molybdate directement dans les appareils où le polymère du fluorure de vinylidène est fondu, tels que les extrudeuses à vis.

Les compositions selon l'invention sont aptes à être mises en oeuvre par tous les procédés classiques de transformation des matières thermoplastiques. Elles conviennent tout particulièrement pour la fabrication d'objets façonnés destinés à être utilisés dans des domaines d'application des polymères du fluorure de vinylidène où une réduction notable de la fumigénicité des objets façonnés est spécialement intéressante, tels que dans l'industrie du bâtiment et de l'aéronautique (tuyaux, gaines, filmes, peintures).

Les exemples qui suivent illustrent l'invention.

L'exemple 1, de référence, concerne une composition exempte de carbonate. Les exemples 2 et 3 concernent des compositions selon l'invention. L'exemple 4, de référence, concerne une composition contenant du sulfate de calcium.

Les formulations évaluées ont la composition suivante, les quantités étant exprimées en poids :

```
Polymère du fluorure de vinylidène : 100
Cire de polyéthylène              : 0,2
Molybdate de calcium              : 0,2
Carbonate (ou sulfate)            : voir Tableau I.
```

Dans tous les exemples, le polymère du fluorure de vinylidène est un copolymère du fluorure de vinylidène contenant 10 % en poids d'unités monomériques dérivées d'une oléfine fluorée de marque déposée SOLEF et de type 11010 produit et commercialisé par SOLVAY & Cie.

Le molybdate de calcium utilisé se présente sous la forme d'une poudre ayant une dimension moyenne des particules inférieure à 50 $\mu$m.

Les compositions 1 à 4 ont été préparées par mélange à sec de tous les ingrédients à température ambiante dans un mélangeur lent. Les mélanges ainsi obtenus ont été granulés à 190°C. A partir des granules, on a pressé des plaques de 3 mm d'épaisseur que l'on a découpées en échantillons de 0,3 cm x 5 cm x 10 cm. Les échantillons 1 à 4 ont ensuite été découpés en deux parties égales dont l'une a été conservée à l'air ambiant (échantillon de référence) et dont l'autre a été plongée pendant 2 heures dans l'eau bouillante. Après ce laps de temps, on a déterminé, au moyen d'un photomètre, les composantes trichromatiques X, Y, Z des huit moitiés d'échantillons par mesure des réflectances au travers de filtres trichromatiques ambre, vert et bleu (illuminant : C, observateur 2°). A partir des composantes trichromatiques, on a ensuite calculé, suivant la méthode de HUNTER, l'écart de coloration $\Delta E$ entre chaque échantillon de référence et chaque échantillon correspondant maintenu pendant 2 heures dans l'eau bouillante. La méthode de HUNTER est exposée dans l'ouvrage de R.S. Hunter, The Measurement of Appearance, Wiley, 1975. Les écarts de coloration $\Delta E$ dont les valeurs sont reprises au Tableau I en annexe permettent d'apprécier la résistance au stockage en atmosphère humide des 4 compositions

évaluées.

### Tableau I

| N° DE L'EXEMPLE | ADDITIF STABILISANT | | | ECART DE COLORA-TION, $\Delta E$ |
|---|---|---|---|---|
| | NATURE | QUANTITE, PARTIES EN POIDS | GRANULO-METRIE MOYENNE, $\mu m$ | |
| 1 R | – | – | – | 12 |
| 2 | carbonate de calcium | 0,02 | 6,4 | 1,9 |
| 3 | carbonate de magnesium | 0,02 | 12,5 | 2,8 |
| 4 R | sulfate de calcium | 0,02 | 18 | 13 |

R = exemple de référence

**Revendications**

1. Compositions stabilisées au stockage à base de polymères du fluorure de vinylidène comprenant un molybdate de métal, caractérisées en ce qu'elles contiennent en outre comme stabilisant un carbonate de métal alcalin ou alcalino-terreux utilisé à raison de 1 à 100 parties en poids pour 100 parties de molybdate de métal.

2. Compositions stabilisées selon la revendication 1, caractérisées en ce que le carbonate de métal alcalin ou alcalino-terreux est un carbonate de métal alcalino-terreux.

3. Compositions stabilisées selon la revendication 2, caractérisées en ce que le carbonate de métal alcalino-terreux est du carbonate de calcium.

4. Compositions stabilisées selon la revendication 1, caractérisées en ce que le carbonate de métal alcalin ou alcalino-terreux est utilisé à raison de 5 à 30 parties en poids pour 100 parties de molybdate de métal.

5. Compositions stabilisées selon la revendication 1, caractérisées en ce que le molybdate de métal est choisi parmi les molybdates de calcium, de zinc et d'aluminium.

6. Compositions stabilisées selon la revendication 1, caractérisées en ce que le molybdate de métal est utilisé à raison de 0,05 à 2 parties en poids, exprimées en molybdène métallique, pour 100 parties de polymère du fluorure de vinylidène.

7. Compositions stabilisées selon la revendication 6, caractérisées en ce que le molybdate de métal est utilisé à raison de 0,10 à 0,50 partie en poids, exprimée en molybdène métallique, pour 100 parties de polymère du fluorure de vinylidène.

8. Compositions stabilisées selon l'une quelconque des revendications 1 à 7, caractérisées en ce que le polymère du fluorure de vinylidène est un homopolymère du fluorure de vinylidène.

9. Compositions stabilisées selon l'une quelconque des revendications 1 à 7, caractérisées en ce que le polymère du fluorure de vinylidène est un copolymère du fluorure de vinylidène contenant au moins 90 % molaires de fluorure de vinylidène.

Claims

1. Storage-stabilized compositions based on vinylidene fluoride polymers, containing a metal molybdate, characterized in that they additionally contain as stabilizer an alkali metal or alkaline-earth metal carbonate employed in a proportion of 1 to 100 parts by weight per 100 parts of metal molybdate.

2. Stabilized compositions according to Claim 1, characterized in that the alkali metal or alkaline-earth metal is an alkaline-earth metal carbonate.

3. Stabilized compositions according to Claim 2, characterized in that the alkaline-earth metal carbonate is calcium carbonate.

4. Stabilized compositions according to Claim 1, characterized in that the alkali metal or alkaline-earth metal carbonate is employed in a proportion of 5 to 30 parts by weight per 100 parts of metal molybdate.

5. Stabilized compositions according to Claim 1, characterized in that the metal molybdate is chosen from calcium, zinc and aluminium molybdates.

6. Stabilized compositions according to Claim 1, characterized in that metal molybdate is employed in a proportion of 0.05 to 2 parts by weight, expressed as molybdenum metal, per 100 parts of vinylidene fluoride polymer.

7. Stabilized compositions according to Claim 6, characterized in that the metal molybdate is employed in a proportion of 0.10 to 0.50 parts by weight, expressed as molybdenum metal, per 100 parts of vinylidene fluoride polymer.

8. Stabilized compositions according to any one of Claims 1 to 7, characterized in that the vinylidene fluoride polymer is a homopolymer of vinylidene fluoride.

9. Stabilized compositions according to any one of Claims 1 to 7, characterized in that the vinylidene fluoride polymer is a copolymer of vinylidene fluoride containing at least 90 mol% of vinylidene fluoride.

Ansprüche

1. Für die Lagerung stabilisierte Zusammensetzungen auf der Basis von ein Metallmolybdat enthaltenden Vinylidenfluoridpolymeren dadurch gekennzeichnet, daß sie außerdem als Stabilisierungsmittel ein Alkalimetall- oder Erdalkalimetallcarbonat enthalten, das im Verhältnis von 1 bis 100 Gewichtsteilen pro 100 Teile Metallmolybdat verwendet wird.

2. Stabilisierte Zusammensetzungen nach Anspruch 1, dadurch gekennzeichnet, daß das Alkalimetall- oder Erdalkalimetallcarbonat ein Erdalkalimetallcarbonat ist.

3. Stabilisierte Zusammensetzungen nach Anspruch 2, dadurch gekennzeichnet> daß das Erdalkalimetallcarbonat Calciumcarbonat ist.

EP 0 275 579 B1

4. Stabilisierte Zusammensetzungen nach Anspruch 1, dadurch gekennzeichnet, daß das Alkalimetall-
oder Erdalkalimetallcarbonat im Verhältnis von 5 bis 30 Gewichtsteilen pro 100 Teile Metallmolybdat
verwendet wird.

5. Stabilisierte Zusammensetzungen nach Anspruch 1, dadurch gekennzeichnet, daß das Metallmolybdat
ausgewählt ist unter den Calcium-, Zink- und Aluminiummolybdaten.

6. Stabilisierte Zusammensetzungen nach Anspruch 1, dadurch gekennzeichnet, daß das Metallmolybdat
im Verhältnis von 0,05 bis 2 Gewichtsteilen, ausgedrückt in metallischem Molybdän, pro 100 Teile
Vinylidenfluoridpolymer verwendet wird.

7. Stabilisierte Zusammensetzungen nach Anspruch 6, dadurch gekennzeichnet, daß das Metallmolybdat
im Verhältnis von 0,10 bis 0,50 Gewichtsteilen, ausgedrückt in metallischem Molybdän, pro 100 Teile
Vinylidenfluoridpolymer verwendet wird.

8. Stabilisierte Zusammensetzungen nach einem der Ansprüche 1 bis 7, dadurch gekennzeichnet, daß
Vinylidenfluoridpolymer ein Vinylidenfluoridhomopolymer ist.

9. Stabilisierte Zusammensetzungen nach einem der Ansprüche 1 bis 7, dadurch gekennzeichnet, daß
das Vinylidenfluoridpolymer ein Vinylidenfluoridcopolymer ist, das wenigstens 90 Mol-% Vinylidenfluo-
rid enthält.

6